# EUROPEAN PATENT APPLICATION

(11) **EP 4 592 639 A1**
(43) Date of publication of application: **30.07.2025**
(21) Application number: 23867907.0
(22) Date of filing: 02.08.2023
(51) Int. Cl.: G01C 7/04, E02F 9/20, E02F 9/24, E02F 9/26, G01C 15/00

(54) **COMPUTING DEVICE, COMPUTING METHOD, AND PROGRAM**

(30) Priority: 22.09.2022 JP 2022151483
(71) Applicant: Topcon Corporation, Tokyo 174-8580 (JP)
(72) Inventor: SASAKI, Takeshi, Tokyo 174-8580 (JP)
(74) Representative: Schmitt-Nilson Schraud Waibel Wohlfrom Patentanwälte Partnerschaft mbB
(86) International application number: PCT/JP2023/028346
(87) International publication number: WO 2024/062781

(57) **Abstract**

Three-dimensional information can be obtained from the viewpoint of heavy equipment. The measurement data of which the total station 200, of which the position and orientation in a specific coordinate system are known, tracks and measures positions of the reflecting prism 102 for heavy equipment 100 on which a laser scanner 101 and the reflecting prism 102 are installed is received; laser scan point cloud which is obtained by the laser scanner 101 is obtained; coordinate transformation is performed on the laser scan point cloud into the specific coordinate system based on the measurement data and orientation of the laser scanner 200; change on a time axis of point cloud data which is obtained by the coordinate transformation is detected; and content of work by the heavy equipment based on the change on the time axis of the point cloud data is specified.

## Description

### Technical Field

The present invention relates to a technique in which three-dimensional data is obtained from heavy equipment.

### Background Art

A technique is known in which position of a piece of heavy equipment is measured by using a surveying apparatus (For example, see Patent Document 1).

Patent Document 1 is Japanese Unexamined Patent Application Publication No. Heisei 08 (1996)-43093.

### Summary of Invention

In order to collect data of results of work that a piece of heavy equipment performed in one day or in a certain period, conventionally, after the work performed by the heavy equipment, three-dimensional information on the object of the work has been again obtained by using a surveying device such as a laser scanner which is arranged at a worksite. Since the work by the heavy equipment and the collection of data of the work results are separately performed in this method, efficiency is low, and improvement is desired. Furthermore, the above-mentioned work should be performed by a person having special knowledge, and high efficiency is desired from this viewpoint. Under such circumstances, an object of the present invention is to promote efficiency regarding collecting data of work results of operation of heavy equipment.

The present invention is an operating device including: a measurement data receiving unit which receives measurement data of which a measuring device, of which the position and orientation in a specific coordinate system are known, tracks and measures positions of a reflecting prism for heavy equipment on which laser scanner and the reflecting prism are installed; a laser scan point cloud obtaining unit which obtains laser scan point cloud which is obtained by the laser scanner; a coordinate transforming unit which performs coordinate transformation of the laser scan point cloud into the specific coordinate system based on the measurement data and orientation of the laser scanner; a change detecting unit which detects change on a time axis of point cloud data which is obtained by the coordinate transformation; and a work content specifying unit which specifies content of work by the heavy equipment based on the change on the time axis of the point cloud data.

In the present invention, an aspect may be mentioned in which the operating device further includes an object of surveillance detecting unit which detects an object which moves toward the heavy equipment on the ground as an object of surveillance, based on the change on the time axis of the point cloud data.

In the present invention, an aspect may be mentioned in which the operating device further includes an alerting unit which performs alerting processing in a case in which the object of surveillance approaches the heavy equipment within a predetermined distance. In the present invention, an aspect may be mentioned in which the laser scan point cloud includes point cloud targeted at a part of the heavy equipment and the operating device further includes an eliminating unit which eliminates the point cloud targeted at the part of the heavy equipment.

The present invention is an operating method including steps of: receiving measurement data of which a measuring device, of which the position and orientation in a specific coordinate system are known, tracks and measures positions of a reflecting prism for heavy equipment on which laser scanner and the reflecting prism are installed; obtaining laser scan point cloud which is obtained by the laser scanner; performing coordinate transformation of the laser scan point cloud into the specific coordinate system based on the measurement data and orientation of the laser scanner; detecting change on a time axis of point cloud data which is obtained by the coordinate transformation; and specifying content of work by the heavy equipment based on the change on the time axis of the point cloud data.

The present invention is a program made to, when read and executed by a computer processor, cause the computer processor to function as: a measurement data receiving unit which receives measurement data of which a measuring device, of which the position and orientation in a specific coordinate system are known, tracks and measures positions of a reflecting prism for heavy equipment on which laser scanner and the reflecting prism are installed; a laser scan point cloud obtaining unit which obtains laser scan point cloud which is obtained by the laser scanner; a coordinate transforming unit which performs coordinate transformation of the laser scan point cloud into the specific coordinate system based on the measurement data and orientation of the laser scanner; a change detecting unit which detects change on a time axis of point cloud data which is obtained by the coordinate transformation; and a work content specifying unit which specifies content of work by the heavy equipment based on the change on the time axis of the point cloud data.

The present invention is an operating device including: a positioning data receiving unit which receives positioning data of a GNSS position measuring device which is installed on a heavy equipment; a laser scan point cloud obtaining unit which obtains laser scan point cloud which is obtained by the laser scanner; a coordinate transforming unit which performs coordinate transformation of the laser scan point cloud into the absolute coordinate system based on the positioning data and orientation of the laser scanner; a change detecting unit which detects change on a time axis of point cloud data which is obtained by the coordinate transformation; and a work content specifying unit which specifies content of work by the heavy equipment based on the change on the time axis of the point cloud data.

### Effects of Invention

According to the present invention, efficiency can be improved of operations for collecting data of the results of work performed by heavy equipment.

### Brief Description of Drawings

Fig. 1 is a conceptual diagram of an Embodiment.
Fig. 2 is a diagram showing a process of earthwork by heavy equipment.
Fig. 3 is a diagram showing changes in ground form occurring as a result of earthwork by heavy equipment.
Fig. 4 is a block diagram of an operating device.
Fig. 5 is a flowchart diagram showing one example of steps of processing.
Fig. 6 is a flowchart diagram showing one example of steps of processing.

### Embodiments of Invention

### 1. First Embodiment

### (Summary)

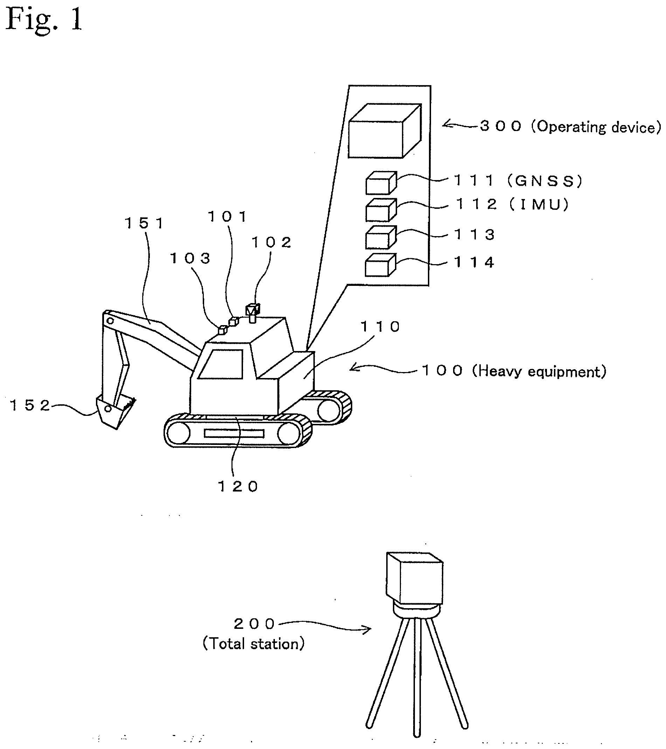

Fig. 1 shows a piece of heavy equipment 100 performing earthwork and a total station 200 performing measurement of locations of the heavy equipment 100. The heavy equipment 100 performs laser scanning using a laser scanner (Lidar) 101 which is installed together with performing the work, so as to obtain laser scan point cloud around the heavy equipment 100. During this, the total station 200 continuously and repeatedly measures the position of a reflecting prism 102 which is installed in the heavy equipment 100 while tracking the reflecting prism 102. Based on measurement value of the position of the reflecting prism 102, coordinate of the laser scan point cloud is transformed into a specific coordinate system, so as to obtain point cloud data in which position of each point is described in the specific coordinate system. Furthermore, change on a time axis in the point cloud data obtained by the coordinate transformation is detected, based on this change, content of work which is performed by the heavy equipment 100 is specified.

### (Heavy equipment)

The heavy equipment 100 is a power shovel. The power shovel is one example, and the kind of heavy equipment is not particularly limited as long as it is a piece of heavy equipment performing earthwork. The heavy equipment 100 includes a base unit 120 which travels on the ground by caterpillar tracks, and a rotating unit 110 which rotates horizontally on the base unit 120. The rotating unit 110 includes a driving compartment and an arm 151. A bucket 152 is arranged on top of the arm 151. These structures are the same as those of a typical power shovel.

The laser scanner 101, the reflecting prism 102, and a camera 103 are arranged on an upper part of the rotating unit 110. Position and orientation of the laser scanner 101, relationship of position between the laser scanner 101 and the reflecting prism 102 in the heavy equipment 100 (the rotating unit 110) may be preliminarily obtained as a known information. The laser scanner 101 scans laser scanning light dot by dot, and measures distance and direction of each reflected point, so as to obtain laser scan point cloud. The laser scanner 101 is arranged so as to face frontward of the rotating unit 110 and to perform laser scanning for object of work performed by the heavy equipment 100.

The GNSS unit 111 gives the laser scanner 101 time information, and position data of each point of the laser scan point cloud which is measured by the laser scanner 101 is obtained associating with the time information during measuring.

A type of the laser scanner 101 is not limited in particular. As a laser scanner 101, an embodiment is possible in which two rotating units whose rotating axes are mutually perpendicular are included, one of the rotating units includes an optical system performing input and output of scanning light, and laser scanning is performed by emitting scanning light as pulsing light while rotating the both rotating units. An embodiment in which an optical system is reciprocated to right and left and furthermore, up and down, so as to perform laser scanning, and an embodiment in which scanning is performed electronically not mechanically, may be mentioned.

Range of laser scanning is set to include a range of work by the heavy equipment 100. In this example, type of the laser scanner 101 is selected and scanning range is set so that a travel range of the bucket 152 is within the range of laser scanning.

An embodiment in which multiple laser scanners are used is also possible. For example, range of scanning is enlarged by using multiple laser scanners.

The reflecting prism 102 is an optical reflection target which is used in surveying using laser light. Here, an all-circumference reflecting prism is used as reflecting prism 102. The reflecting prism 102 reflects incident light changing the direction by 180 degrees. As an optical reflection target, other than the reflecting prism, a reflection target having retroreflection properties may be used.

The camera 103 is a digital still camera which photographs still images continuously and repeatedly or a camera for recording a moving image. The camera 103 is arranged so that photographing range thereof overlaps the scanning range by the laser scanner 101. Fig. 1 shows an example in which one camera 101 is arranged on the heavy equipment 100; however, multiple cameras facing multiple directions can be arranged. Furthermore, a stereo camera can be used. A depth camera can be employed as a camera.

In a case in which photographed image by the camera 103 and point cloud data obtained by the laser scanner 101 are associated with each other, a 3D data based on the photographed image can be obtained. In this case, the 3D data of an object of photographing is obtained from the photographed image using the principle of SfM (Structure from Motion). Position and orientation of the camera 103 in the heavy equipment 100 may be known, or unknown. In a case in which SfM is used, since position and orientation of the camera during photographing is calculated by adjustment calculation, the position and the orientation of the camera 103 in the heavy equipment 100 can be unknown. This technique is disclosed in Japanese Unexamined Patent Application Publication No. 2022-147113, for example. Of course, the position and the orientation of the camera 103 in the heavy equipment 100 can be known.

The heavy equipment 100 includes a GNSS unit 111, an IMU 112, a travel detecting unit 113, a rotation detecting unit 114 and an operating unit 300. It should be noted that explanations are omitted, and the heavy equipment 100 includes other functions necessary for operating the power shovel.

The GNSS unit 111 measures positions using GNSS (Global navigation Satellite System). A GNSS unit 111 having typical accuracy is selected, and it is not necessary to select a unit having high accuracy using relative positioning. Relationships of position among the laser scanner 101, the reflecting prism 102, the GNSS unit 111 and the IMU 112 in the heavy equipment 100 are known.

The IMU 112 is an inertia measuring unit which measures acceleration and detects change in orientation. The IMU 112 is calibrated by positioning data of the GNSS unit 111 and outputs measurement value of orientation in the absolute coordinate system. The absolute coordinate system is a coordinate system used in GNSS or maps. For example, it is assumed that the heavy equipment 100 travels straight along a short distance. During this, travel direction in the absolute coordinate system is calculated from positioning data of the GNSS unit 111, and orientation of the IMU 112 in the absolute coordinate system is determined. This processing is performed as needed, orientation of the IMU 112 and change therein in the absolute coordinate system can be detected.

The GNSS unit 111 gives the IMU 112 time information, and measurement data of orientation is output associated with the time information during measurement.

It should be noted that a method may also be mentioned in which travel of the IMU 112 is detected by measuring position of the reflecting prism 102 by the total station 200 and the IMU 112 is calibrated based on it. In this case, the IMU 112 can be calibrated in the coordinate system in which position and orientation of the total station 200 are determined, and orientation and change therein of the IMU 112 in the coordinate system can be detected.

The GNSS unit 111 includes a highly accurate clock, and time information obtained therefrom is imparted to the laser scanner 101, the IMU 112, and the camera 103.

The travel detecting unit 113 detects whether or not the base unit 120 travels on caterpillar tracks. When the heavy equipment 100 travels, the travel detecting unit 113 outputs a signal which indicates that the heavy equipment 100 is now traveling (the base unit 120 is travelling on caterpillar tracks). According to this signal, the heavy equipment 100 can be determined as to whether or not it is traveling (running). When the rotating unit 110 rotates, the rotation detecting unit 114 outputs a signal which indicates that the rotating unit 110 is now rotating. According to this signal, the rotating unit 110 can be determined as to whether or not it is rotating. The operating unit 300 is explained later.

Position of the heavy equipment 100 can be understood by position of the IMU 112. Position of the heavy equipment 100 can be understood by a position of the reflecting prism 102, a position of a point somewhere on the rotation center axis of the rotating unit 110, or a position of a point somewhere on the heavy equipment 100.

### (Total station)

The total station 200 is an example of a surveying apparatus which can measure position. The total station 200 includes a function of positioning using laser light, a camera, a clock, a storing unit of survey data, a communication interface, a user interface, a function of searching for an object of survey (reflecting prism 102), and a function of tracking the object of survey even if it travels. Commonly available kinds of total station can be used as the total station 200.

Before processing, position and orientation of the total station 200 in a specific coordinate system (position and orientation) are obtained, and they are regarded as known data. A coordinate system used is the absolute coordinate system or a local coordinate system. In a case in which the absolute coordinate system is used as a coordinate system specifying position of the IMU 112, position and orientation of the total station 200 are obtained in the absolute coordinate system. On the other hand, in a case in which the local coordinate system is used as a coordinate system specifying position of the IMU 112, position and orientation of the total station 200 are obtained in the local coordinate system. The position of the total station 200 is understood by position of the optical origin point of an optical system for performing ranging.

The heavy equipment 100 begins work under condition in which the total station 200 collimates and locks the reflecting prism 102. During the work by the heavy equipment 100, the total station 200 measures position of the reflecting prism 102 repeatedly while tracking it. Gaps between measurements of position of the reflecting prism 102 performed repeatedly is set to be about 0.1 seconds to 5 seconds.

The total station 200 includes a clock, and obtains time data of positioning associated with the positioning data.

### (Operating unit)

The operating unit 300 performs operation regarding laser scan point cloud obtained by the laser scanner 101 and other operations. The operating unit 300 is a computer, which includes a CPU, a storing device, and various types of interfaces.

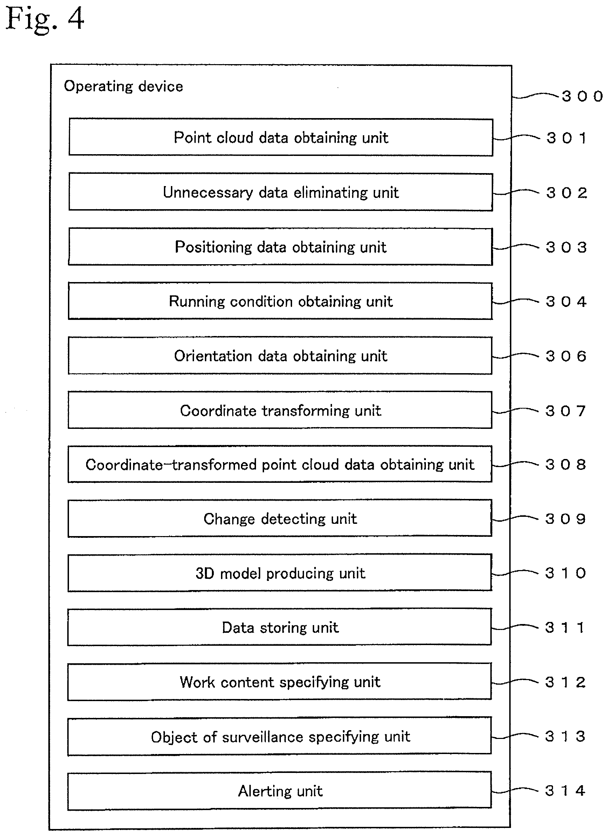

Fig. 4 shows a block diagram of the operating unit 300. The operating unit 300 includes a point cloud data obtaining unit 301, an unnecessary data eliminating unit 302, a positioning data obtaining unit 303, a running condition obtaining unit 304, an orientation data obtaining unit 306, a coordinate transforming unit 307, a coordinate-transformed point cloud data obtaining unit 308, a change detecting unit 309, a 3D model producing unit 310, a data storing unit 311, a work content specifying unit 312, an object of surveillance specifying unit 313, and an alerting unit 314.

Some or all of these functional units are realized by executing action programs by the CPU of the operating unit 300. Some or all of these functional units can be constructed of special hardware (electrical circuits).

The point cloud data obtaining unit 301 obtains laser scan point cloud which is obtained by laser scanning by the laser scanner 101. The origin point of this laser scan point cloud is the origin point of optical system of the laser scanner 101. The laser scan point cloud is obtained as a data set in which data of distance and direction from the origin point, and emitting time of scanning light regarding each of scanning points is collected.

During the heavy equipment 100 works, the laser scanner 101 performs laser scanning, so as to obtain laser scan point cloud of an object which changed by the work (for example, excavated ground form or the like). During this, if position and orientation of the laser scanner 101 moves due to travel of the heavy equipment 100 or rotation of the rotating unit 110, the origin point of laser scanning (the above-mentioned origin point) may move, direction of coordinate axis of the laser scanner 101 may change, and laser scan point cloud may not be described in one coordinate system. Therefore, coordinate transformation mentioned below is performed so that each point of laser scan point cloud obtained by the laser scanner 101 can be handled in a same coordinate system.

The unnecessary data eliminating unit 302 eliminates laser scan point cloud of a portion unnecessary for making 3D data of an object of work such as the arm 151 or the bucket 152 of the heavy equipment 100. Laser scan point cloud obtained by laser scanning of the laser scanner 101 includes point cloud targeted at the arm 151 or the bucket 152 of the heavy equipment 100. Since these laser scan point cloud are unnecessary for producing 3D data of an object of work, corresponding laser scan point cloud is eliminated.

For example, the laser scan point cloud of the arm 151 or bucket 152 travels relative to laser scan point cloud of ground form of background during travel of the heavy equipment 100 or rotation of the rotating unit 110. For example, when the heavy equipment 100 travels, the laser scan point cloud of background moves like flowing in a direction opposite to the direction of travel; however, the laser scan point cloud of the arm 151 or the bucket 152 moves in a direction same as the heavy equipment 100 with respect to the point cloud of background. A point cloud showing this behavior is specified as the point cloud of the arm 151 or the bucket 152 and is eliminated.

The positioning data obtaining unit 303 obtains position data of the reflecting prism 102 which is measured by the total station 200. The total station 200 includes a clock, and it obtains the time during measuring the position of the reflecting prism 102. The position data of the above-mentioned reflecting prism 102 is output from the total station 200 under condition in which the data is related to the measuring time, and it is obtained by the positioning data obtaining unit 303.

The positioning data of the total station 200 is described by the coordinate system in which position and orientation of the total station 200 are obtained. For example, in a case in which the position and the orientation of the total station 200 are obtained in the absolute coordinate system, positioning data obtained is described using the absolute coordinate system. Furthermore, for example, in a case in which the position and the orientation of the total station 200 are obtained in a local coordinate system, positioning data obtained is described using the local coordinate system.

Relationships of position among the laser scanner 101, the reflecting prism 102 and the IMU 112 are known. In addition, relationship of orientation between the laser scanner 101 and the IMU 112 is known. Therefore, by positioning data of the reflecting prism 102 by the total station 200 and orientation data thereof measured using the IMU 112, position of the laser scanner 101 can be calculated. That is, by the total station 200, the position of the laser scanner 101 can be measured. For example, in a case in which position and orientation of the total station 200 are obtained in the absolute coordinate system, position of the laser scanner 101 in the absolute coordinate system can be measured by the total station 200.

The running condition obtaining unit 304 obtains information regarding whether the heavy equipment 100 travels or not, and whether the rotating unit 110 rotates or not. Here, whether or not the heavy equipment 100 travels is determined by a signal from the travel detecting unit 111, and whether or not the rotating unit 110 rotates is determined by a signal from the rotation detecting unit 112.

The orientation data obtaining unit 306 obtains orientation data which is measured by the IMU 112. Relationships of position and orientation between the IMU 112 and the laser scanner 101 are known. Therefore, orientation of the laser scanner 101 can be measured by the IMU 112.

The coordinate transforming unit 207 performs coordinate transformation of laser scan point cloud which is obtained by the laser scanner 101 into a specific coordinate system.

Data of a laser scanning point which is measured by the laser scanner 101 is distance and direction from the laser scanner 101. This data is described in a local coordinate system specific to the laser scanner 101.

Under a condition in which the heavy equipment 100 travels or the rotating unit 110 rotates, laser scanning is performed by the laser scanner 101, since the laser scanner 101 travels while performing laser scanning, the origin point of the local coordinate system specific to the laser scanner 101 also travels. Furthermore, there may be a case in which the local coordinate system rotates (orientation changes). Under such circumstances, laser scan point cloud obtained cannot be described in one coordinate system. In an extreme case, a specific coordinate system may be necessary for every numerous scanning points (Of course, on the other hand, there may be a case in which the laser scanner 101 does not travel at all or travels slowly).

Then, coordinate transformation is performed on the laser scan point cloud obtained by the laser scanner 101 into a specific coordinate system so as to enable point cloud data to be described in one coordinate system. Here, a case is explained in which coordinate transformation is performed on the laser scan point cloud obtained by the laser scanner 101 into the absolute coordinate system.

First, preliminarily, position and orientation of the total station 200 are obtained in the absolute coordinate system beforehand. The total station 200 continuously measures position of the reflecting prism 102 during working (operating) or the heavy equipment 100. The positioning data in this case is obtained as data in which position in the absolute coordinate system and positioning time are associated.

On the other hand, orientation of the laser scanner 101 in the absolute coordinate system is measured by the IMU 112. Furthermore, time at which this orientation is measured is obtained.

In this way, the position and the orientation of the laser scanner 101 in the absolute coordinate system at a certain time t are obtained.

Then, coordinate transformation is performed on each of scanning points obtained by the laser scanner 101 into the absolute coordinate system. For example, a scanning point obtained by the laser scanner 101 at a time t is considered. Here, position of the laser scanner 101 in the absolute coordinate system at the time t is measured by the total station 200, and orientation of the laser scanner in the absolute coordinate system is measured by the IMU 112. Therefore, position of the scanning point in the absolute coordinate system can be determined. By performing this procedure regarding each scanning point, coordinate transformation can be performed on each scanning point obtained by the laser scanner 101 into the absolute coordinate system.

According to the above principle, coordinate transformation of the laser scan point cloud which is described in the local coordinate system specific to the laser scanner 101 which travels and rotates, into the absolute coordinate system, is possible.

Generally, coordinate transformation from first coordinate system to second coordinate system is performed by parallel movement and rotation. Information regarding the above parallel movement is obtained by giving the position of the laser scanner 101 in the absolute coordinate system, and information regarding the above rotation is obtained by giving the orientation in the absolute coordinate system of the laser scanner 101 at the position. In this way, coordinate transformation is performed from the local coordinate system specific to the laser scanner 101 into the absolute coordinate system regarding the scanning point measured at the time t. By performing this coordinate transformation on each of every scanning points, coordinate transformation can be performed on the laser scan point cloud obtained by the laser scanner 101 while moving, into the absolute coordinate system. In this way, the point cloud data in which the laser scan point cloud obtained by the laser scanner 101 is described in the absolute coordinate system can be obtained.

In a case in which coordinate transformation is performed on the laser scan point cloud obtained by the laser scanner 101 to a specific local coordinate system, position and orientation of the laser scanner 101 in the local coordinate system used is employed as the position and the orientation of the laser scanner 101. In addition, the IMU 112 measures orientation data in the local coordinate system.

In this case, position and orientation of the total station 200 is preliminarily obtained in the local coordinate system used. In addition, calibration of the IMU 112 and calculation of the orientation in the local coordinate system are performed by using positioning data of the reflecting prism 102 by the total station 200, and orientation data is obtained as a data in the local coordinate system. Then, position and orientation of the laser scanner 101 in the local coordinate system are obtained, and the coordinate transformation is performed regarding each point.

In this case, the orientation data obtained by the IMU 112 and the positioning data of the reflecting prism 102 obtained by the total station 200 are sent to the operating device 300. Calibration of the IMU 112 and calculation of orientation in the local coordinate system are performed in the operating device 300. This operation is performed in the orientation data obtaining unit 306, for example. This operation can be performed in the IMU 112.

It is ideal that each laser scanning point and the time information are associated with each other, the time can be understood by a time having width to some extent. For example, measuring time of scanning points P1, P2, P3, P4, P5 can be regarded as time t1, and measuring time of scanning points P6, P7, P8, P9, P10 can be regarded as time t2.

Since laser scanning is performed dot by dot, in a case in which multiple points which are in line on a time axis are considered, set of these points is obtained in a time having width to some extent. Then, if point cloud data of a certain range is considered, a time at which the last point in the range is measured is regarded as obtaining time of the point cloud data. That is, last time in the time width is defined as obtaining time of the point cloud data. As an obtaining time of the point cloud data, first time or intermediate time in the time width can be employed.

The coordinate-transformed point cloud data obtaining unit 308 obtains point cloud data in which coordinate transformation is performed into the above-mentioned specific coordinate system. This point cloud data includes point cloud data of ground form which is an object of work of the heavy equipment 100.

The change detecting unit 310 compares earlier 3D data and later 3D data along the time axis, and detects change in 3D data by calculating the differences. The 3D data is the point cloud data in which coordinate transformation is performed into the specific coordinate system, or the below-mentioned 3D model which is produced based on the point cloud data.

The 3D model producing unit 310 produces 3D models based on point cloud data which is obtained by the coordinate-transformed point cloud data obtaining unit 308. The 3D model is an outline model or a TIN model which is produced based on the point cloud data. For example, a 3D model used in CAD is one example.

The data storing unit 311 stores kinds of data and action programs used in the operating unit 300, and kinds of data (for example, 3D data such as point cloud data) obtained by the operating unit 300.

The work content specifying unit 312 specifies content of work which the heavy equipment 100 performed, based on point cloud data or a 3D model based on the point cloud data which are obtained by the coordinate-transformed point cloud data obtaining unit 308. In this case, 3D data (point cloud data or a 3D model) of an object of surveillance such as a person mentioned below is eliminated since that data is not part of the work content.

Practically, a 3D data based on a photographed image which is obtained at a step before a specific work, and a 3D data based on a photographed image which is obtained at a step after the specific work, are compared, and differences in data thereof are detected. This processing is performed in the change detecting unit 309. Next, in the above difference data, 3D data of an object which travels on the ground and moves relative to the heavy equipment 100 is eliminated as 3D data of an object of surveillance such as a person. This processing is performed in the object of surveillance specifying unit 312 mentioned below. In this way, change in 3D data which is generated by work of the heavy equipment 100 is detected, and content of such work (such as excavating ground) is specified.

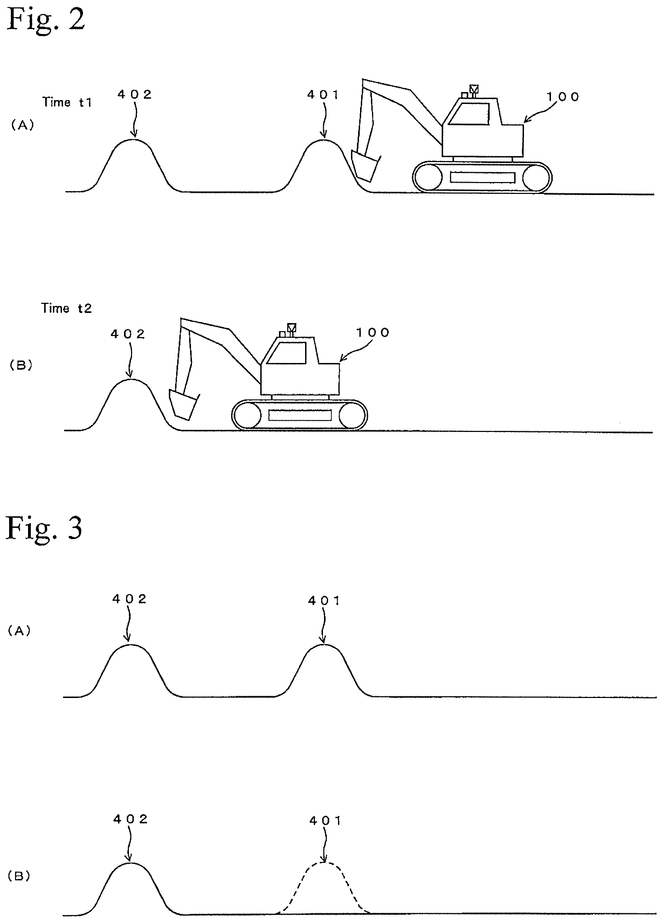

Hereinafter, a practical example is explained. A shape of the ground may change by earthwork of the heavy equipment 100. Fig. 2(A) shows a situation of a site of earthwork at time t1, and Fig. 2(B) shows a situation of the site of earthwork at time t2. Here, t2 is a time after t1.

Fig. 2(A) (time t1) shows a situation in which mounds 401 and 402 of the ground form exist. Fig. 2(B) (time t2) shows a situation in which the mound 401 of the ground form is removed by the heavy equipment 100 so as to flatten the ground and the mound 402 of the ground form remains after the situation at time t1 of Fig. 2(A).

In a case in which the ground form is focused on, as shown in Fig. 3(B), the mound 401 of the ground form shown in Fig. 3(A) is eliminated by the work of the heavy equipment 100.

Here, if the 3D data of the ground form in the situation of Fig. 2(A) or Fig. 3(A) and the 3D data of the ground form in the situation of Fig. 2(B) or Fig. 3(B) are focused on, there is a difference in 3D data corresponding to the mound of the ground form 401 between them.

It should be noted that the 3D data mentioned here means the point cloud data or the 3D model (three-dimensional model) based on the point cloud data.

If explaining in the above example, 3D data of the mound 401 of the ground form which is an object to be eliminated can be extracted by calculating differences between the 3D data of the ground form in the situation of Fig. 3(B) and the 3D data of the ground form in the situation of Fig. 3(A).

It should be noted that laser scanning by the laser scanner 101 is performed having a time width to an extent, and it is not performed at a point on a time axis. Therefore, time associated with 3D data obtained has a time width to some extent, and the width can be understood by an intermediate value or representative value thereof, for example.

For example, the 3D data may be updated every 10 seconds or every 30 seconds. During this updating, newly added 3D data and deleted 3D data (for example, 3D data of the above mound of the ground form 401 is one example) are extracted, and they can be stored separately. It should be noted that the cycle of updating can be appropriately set according to ability, necessary resolution on the time axis or the like of hardware used.

For example, it is assumed that the point cloud data is updated every 30 seconds. In this case, if point cloud data at a certain time is focused on, by extracting point cloud data of differences from point cloud data 30 seconds before, newly added point cloud data and deleted point cloud data can be obtained. For example, an example of the deleted point cloud data is the point cloud data "mound 401 of the ground form" which is finally eliminated as shown in Fig. 4.

For example, 3D data at each of time T1, time T2, Time T3 etc. are generated. In this case, 3D data at each time is stored in relation to its time. This data is stored in the data storing unit 311.

By tracking changes along a time axis of 3D data at each time above, change in 3D data can be understood. For example, change in ground shape due to earthwork of the heavy equipment 100 can be understood by changing in 3D data. For example, change in ground shape due to earthwork of the heavy equipment 100 can be displayed as an image on a display as change over time of a 3D model. Furthermore, earth and sand which are excavated or banked can be understood as 3D data.

Objects which may change are not limited to the ground form, and they can be buildings or objects subjected to work. For example, in a case in which a building or an object subjected to work is broken by heavy equipment, the transition can be obtained as 3D data by applying the present embodiment.

The object of surveillance specifying unit 312 specifies an object which travels relative to the heavy equipment 100 on the ground, in particular, an object which approaches relative to the heavy equipment 100 on the ground, as an object of surveillance. By performing this processing at regular intervals, processing can be realized in which approach or contact of the heavy equipment 100 and a person, and approach or contact of a piece of heavy equipment 100 and another piece of heavy equipment can be avoided.

Furthermore, since the 3D data which is an object of surveillance is not the 3D data of an object of work by the heavy equipment 100, by specifying it, the 3D data of an object of work (for example, ground form) shown in Fig. 3 can be extracted, and content of work can be specified efficiently. For example, it may become possible to handle a person and an object of work separately in 3D data.

For example, a case in which a person approaches the heavy equipment 100 is assumed. Here, 3D data is assumed to be updated every 5 seconds. In this case, by surveilling transition of change of 3D data every 5 seconds, approaching a piece of heavy equipment 100 can be detected as an object of surveillance.

Here, changes in 3D data obtained is surveilled, and 3D data which travels relative to background 3D data (ground form 3D data) and travels relative to the heavy equipment 100 is detected as an object of surveillance. That is, 3D data traveling on the ground is detected. Furthermore, by detecting whether or not the object of surveillance is a person by image recognition processing, a situation in which a person approaches the heavy equipment 100 can be understood. It should be noted that in a case in which alerting is performed as mentioned below, the processing regarding specification of an object of surveillance should be performed in real time or with as short a delay as possible.

The alerting unit 314 alerts regarding the object of surveillance which the object of surveillance specifying unit 313 specifies. For example, alerting processing is performed in a case in which distance between heavy equipment 100 and an object of surveillance such as a person or the like is less than a predetermined distance. Alerting is performed by a method of emitting a sound such as alerting sound to an operator of the heavy equipment 100 or to the surroundings, an alerting display using a display arranged in a cab of the heavy equipment 100, or a method outputting the alert signal to an external device such as a smartphone.

### (Example of steps of processing: No. 1)

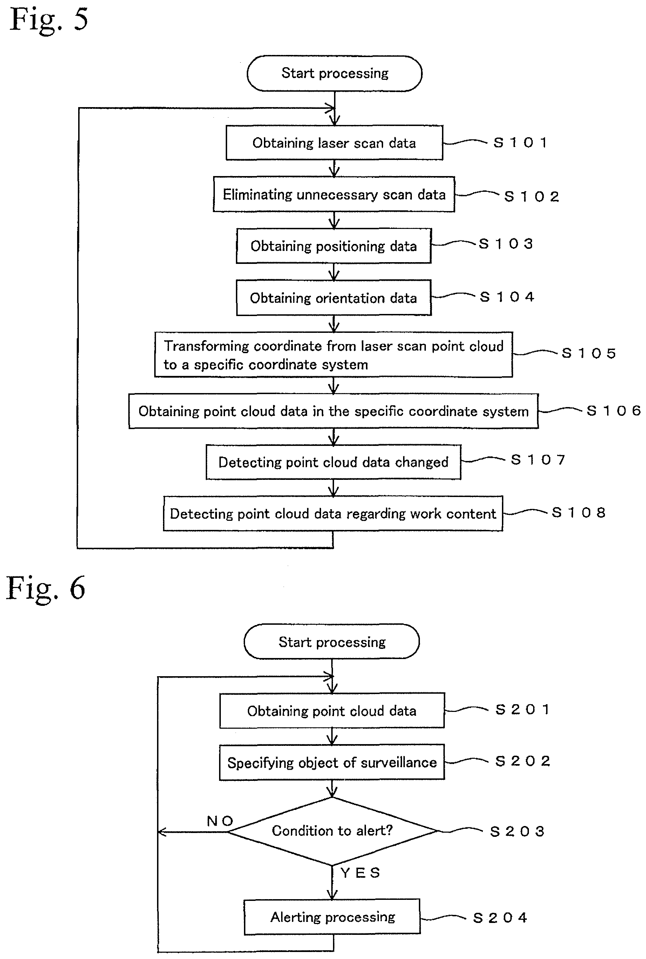

Fig. 5 shows one example of steps of processing. Program executing the processing of Fig. 5 is stored in the data storing unit 311 or other appropriate storing device, is read out therefrom, and this is then executed by the CPU of a computer of the operating unit 300. A construction is also possible in which the program is stored in a server connected to the internet and is downloaded therefrom. Processing in Fig. 6 is the same.

Processing in Fig. 5 can be performed simultaneously with operation of the heavy equipment 100, or can be performed as post-processing after work by the heavy equipment 100 is completed.

First, laser scan point cloud data which the laser scanner 101 obtained is obtained (Step S101). Next, in the laser scan point cloud data obtained, point cloud data of unnecessary parts are eliminated (Step S102). Here, the point cloud data of unnecessary parts corresponds to scan data of a part unnecessary for collecting 3D data of an object of work such as the arm 151, bucket 152 and the like of the heavy equipment 100. This processing is performed in the unnecessary data eliminating unit 302.

Next, position data of the reflecting prism 102 measured by the total station 200 is obtained (Step S103). Next, orientation data measured by the IMU 112 is obtained (Step S104).

Next, coordinate transformation is performed on the laser scan point cloud obtained in the step S101 into a specific coordinate system (Step S105). This processing is performed in the coordinate transforming unit 307. Next, the point cloud data in which coordinate transformation is performed is obtained as "point cloud data in the specific coordinate system)" (Step S106).

Next, two point cloud data of earlier and later along the time axis are compared, differences thereof are obtained, and point cloud data which changed over time is detected (Step S107). This processing is performed in the change detecting unit 309.

Next, among point cloud data in which change is detected, point cloud data regarding an object traveling on the ground is eliminated, and point cloud data which is changed by work of the heavy equipment 100 is specified as point cloud data regarding work content (Step S108). Here, in the point cloud data in which change is detected, the point cloud data regarding an object traveling on the ground is specified in the object of surveillance specifying unit 313. In addition, in the point cloud data in which change is detected, processing in which the point cloud data regarding an object traveling on the ground is eliminated and the point cloud data regarding work content is specified is performed in the work content specifying unit 312.

### (Example of steps of processing: No. 2)

Fig. 6 shows a flow chart diagram of an example of steps of processing to prevent the heavy equipment 100 and a person or the like from being interfered with. It is necessary to perform this processing as soon as possible without delay after obtaining laser scan point cloud. First, processing of Steps S101 to S106 in Fig. 5 are performed, and laser scan point cloud data obtained by the laser scanner 101 is obtained (Step S201).

Next, an object which moves relative to the heavy equipment 101 and the background ground form is specified as an object of surveillance (Step S202). This processing is performed in the object of surveillance specifying unit 313. Next, distance between the heavy equipment 100 and the object of surveillance is calculated, and determination is performed as to whether the distance is within a predetermined distance or not (Step S203).

In a case in which the distance is within the predetermined distance, alerting processing is performed (Step S204), and in a case in which the distance is greater than the predetermined distance, processing in Step S201 and processing thereafter are repeated.

### (Superiority)

In the present embodiment, the measurement data of which the total station 200, of which the position and orientation in a specific coordinate system are known, tracks and measures positions of the reflecting prism 102 for heavy equipment 100 on which the laser scanner 101 and the reflecting prism 102 are installed is received; the laser scan point cloud which is obtained by the laser scanner 101 is obtained; coordinate transformation is performed on the laser scan point cloud into the specific coordinate system based on the measurement data and orientation of the laser scanner 200; change on a time axis of point cloud data which is obtained by the coordinate transformation is detected; and content of work by the heavy equipment based on the change on the time axis of the point cloud data is specified.

According to the present embodiment, the 3D data of an object of work can be obtained while the heavy equipment 100 is performing work. Therefore, operation regarding collecting results data of work performed by the heavy equipment can be performed efficiently. In addition, risk of interference between the heavy equipment and a worker or the like can be detected, it may become possible to avoid risky situation possibly causing accident, and to prevent accident.

### 2. Second Embodiment

Position of the laser scanner 101 can be obtained from measurement value of GNSS unit 111. In this case, based on positioning data of the reflecting prism 102 by the total station 200, positioning data of the GNSS unit 111 is calibrated, and measurement value after the calibration is used. The positioning data obtained by the GNSS unit 111 alone includes error, by performing the above calibration using the total station 200, accuracy of measuring of position by the GNSS unit 111 can be increased.

Furthermore, by performing positioning by the GNSS unit 111 in which a relative positioning such as a RTK method is used, a construction is also possible in which positioning of the reflecting prism 102 by the total station 200 is unnecessary (of course, they can be used together). In this case, the positioning data obtaining unit 303 obtains position information which the GNSS unit 111 measured.

### 3. Third Embodiment

A construction is also possible in which function of the operating unit 300 is executed by using a data processing server. In this case, kinds of measurement data are sent from the heavy equipment 100 and the total station 200 to the data processing server via appropriate data communication lines such as an internet line, and processing performed in the operating unit 300 is executed therein.

### 4. Fourth Embodiment

A method may be mentioned in which laser scan point cloud which is obtained in a condition in which the laser scanner 101 stays static (not moving) with respect to the ground (absolute coordinate system) is selected and obtained, and point cloud data of an object of work by the heavy equipment 100 is obtained by using the laser scan point cloud obtained.

The running condition obtaining unit 304 obtains data necessary to determine whether the heavy equipment 100 runs (travels) or not, and whether the rotating unit 110 rotates or not. For example, it is assumed that the heavy equipment 100 does not travel and the rotating unit 110 stops rotation during time t1 to t2. In this case, laser scan point cloud which the laser scanner 101 obtained during the time t1 to t2 is used in the operation regarding specifying work content or specifying an object of surveillance.

For example, it is assumed that a first laser scan point cloud which is obtained by the laser scanner 101 staying static at a first position and being in a first orientation, a second laser scan point cloud which is obtained by the laser scanner 101 staying static at a second position and being in a second orientation, a third laser scan point cloud which is obtained by the laser scanner 101 staying static at a third position and being in a third orientation etc. are obtained.

Here, position of origin point of the laser scan data obtained at each static condition (position of optical origin point of the laser scanner 101) is calculated from position of the reflection prism 01 which is positioned by the total station 200. Since relationship of position of the laser scanner 101 and the reflection prism 102 is known, based on position of the reflection prism 102 and orientation data obtained from the IMU 112, position of the laser scanner 101 can be calculated. In addition, based on orientation data obtained from the IMU 122, orientation of the laser scanner 101 can be calculated.

As already explained in First Embodiment, a specific coordinate system used here is the coordinate system in which position and orientation of the total station 200 are determined.

In this way, position and orientation (direction) of the first laser scan point cloud, position and orientation of the second laser scan point cloud, position and orientation of the third laser scan point cloud etc. in the specific coordinate system can be obtained. Then, coordinate transformation can be performed on each laser scan point cloud into the specific coordinate system, so that multiple laser scan point cloud which are described in the same coordinate system can be obtained.

It is possible to determine whether or not the heavy equipment 100 runs (travels) and whether or not the rotating unit 110 rotates from positioning data of the reflecting prism 102 by the total station 200. For example, it is assumed that the total station is positioned every 0.5 seconds. In this measurement of position of the reflecting prism 102 performed every 0.5 seconds, in a case in which there is no change in measured position of the reflecting prism 102 at positioning time t1 and t2 which are mutually adjacent along the time axis, it may be determined that the heavy equipment 100 did not travel and the rotating unit 110 did not rotate during the period (between the time t1 and t2).

### 8. Other Matters

The present invention can be applied to arrangement or construction of a building or object subjected to work using heavy equipment and demolishing of a building or object subjected to work using heavy equipment.

### Explanation of Reference Numerals

100: Heavy equipment, 101: laser scanner, 102: reflecting prism, 103: camera, 120: base unit, 110: rotating unit, 111: GNSS unit, 112: IMU, 113: travel detecting unit, 114: rotation detecting unit, 300: operating unit.

## Claims

1. An operating device comprising:
a measurement data receiving unit which receives measurement data of which a measuring device, of which the position and orientation in a specific coordinate system are known, tracks and measures positions of a reflecting prism for heavy equipment on which laser scanner and the reflecting prism are installed,
a laser scan point cloud obtaining unit which obtains laser scan point cloud which is obtained by the laser scanner,
a coordinate transforming unit which performs coordinate transformation of the laser scan point cloud into the specific coordinate system based on the measurement data and orientation of the laser scanner,
a change detecting unit which detects change on a time axis of point cloud data which is obtained by the coordinate transformation, and
a work content specifying unit which specifies content of work by the heavy equipment based on the change on the time axis of the point cloud data.

2. The operating device according to claim 1,
wherein the operating device further comprising an object of surveillance detecting unit which detects an object which moves toward the heavy equipment on the ground as an object of surveillance, based on the change on the time axis of the point cloud data.

3. The operating device according to claim 2,
wherein the operating device further comprising an alerting unit which performs alerting processing in a case in which the object of surveillance approaches the heavy equipment within a predetermined distance.

4. The operating device according to any one of claims 1 to 3,
wherein the laser scan point cloud includes point cloud targeted at a part of the heavy equipment and the operating device further comprising an eliminating unit which eliminates the point cloud targeted at the part of the heavy equipment.

5. An operating method comprising steps of:
receiving measurement data of which a measuring device, of which the position and orientation in a specific coordinate system are known, tracks and measures positions of a reflecting prism for heavy equipment on which laser scanner and the reflecting prism are installed,
obtaining laser scan point cloud which is obtained by the laser scanner,
performing coordinate transformation of the laser scan point cloud into the specific coordinate system based on the measurement data and orientation of the laser scanner,
detecting change on a time axis of point cloud data which is obtained by the coordinate transformation, and
specifying content of work by the heavy equipment based on the change on the time axis of the point cloud data.

6. A program made to, when read and executed by a computer processor, cause the computer processor to function as:
a measurement data receiving unit which receives measurement data of which a measuring device, of which the position and orientation in a specific coordinate system are known, tracks and measures positions of a reflecting prism for heavy equipment on which laser scanner and the reflecting prism are installed,
a laser scan point cloud obtaining unit which obtains laser scan point cloud which is obtained by the laser scanner,
a coordinate transforming unit which performs coordinate transformation of the laser scan point cloud into the specific coordinate system based on the measurement data and orientation of the laser scanner,
a change detecting unit which detects change on a time axis of point cloud data which is obtained by the coordinate transformation, and
a work content specifying unit which specifies content of work by the heavy equipment based on the change on the time axis of the point cloud data.

7. An operating device comprising:
a positioning data receiving unit which receives positioning data of a GNSS position measuring device which is installed on a heavy equipment,
a laser scan point cloud obtaining unit which obtains laser scan point cloud which is obtained by the laser scanner,
a coordinate transforming unit which performs coordinate transformation of the laser scan point cloud into the absolute coordinate system based on the positioning data and orientation of the laser scanner,
a change detecting unit which detects change on a time axis of point cloud data which is obtained by the coordinate transformation, and
a work content specifying unit which specifies content of work by the heavy equipment based on the change on the time axis of the point cloud data.
